# EUROPÄISCHE PATENTSCHRIFT

(11) **EP 2 642 843 B1**
(45) Veröffentlichungstag und Bekanntmachung des Hinweises auf die Patenterteilung: **02.03.2016**
(21) Anmeldenummer: 11793330.9
(22) Anmeldetag: 11.11.2011
(51) Int. Cl.: A01D 45/02

(54) **VORSATZGERÄT ZUR ERNTE VON STÄNGELIGEM HALMGUT**
ATTACHMENT DEVICE FOR HARVESTING STALKY STEM MATERIAL
ADAPTATEUR POUR LA RÉCOLTE D'UN PRODUIT À TIGES SUR PIED

(30) Priorität: 22.11.2010 DE 102010051887
(43) Veröffentlichungstag der Anmeldung: 02.10.2013
(73) Patentinhaber: Carl Geringhoff GmbH & Co. KG, 59227 Ahlen (DE)
(72) Erfinder: SURMANN, Klemens, 59227 Ahlen (DE); HEMMESMANN, André, 48336 Sassenberg (DE); SONNEN, Robert, 59269 Beckum (DE)
(74) Vertreter: Busse & Busse
(86) Internationale Anmeldenummer: PCT/EP2011/005684
(87) Internationale Veröffentlichungsnummer: WO 2012/069144

(56) Entgegenhaltungen:
- EP-A1- 1 106 049
- WO-A1-2007/066161
- DE-A1-102006 001 383
- US-A- 3 596 448

## Beschreibung

Die Vorliegenden Erfindung bezieht sich auf ein Vorsatzgerät zur Ernte von stängeligem Halmgut, insbesondere Mais, mit Halmteilern, Schneidvorrichtungen zum Abschneiden des stängeligem Halmguts, Fördervorrichtungen zum Abfördern des geschnittenen stängeligem Halmguts, einer Anzahl von über die Arbeitsbreite des Vorsatzgeräts verteilten Pflückaggregaten zur Trennung von Früchten von den Stängeln mit jeweils mindestens einer Pflückwalze und einem der Pflückwalze zugeordneten Pflückspalt, einer jedem Pflückaggregat zugeordneten Zerkleinerungsvorrichtung für die Stängel, und einer Vorrichtung zum Sammeln und Zusammenführen von abgetrennten Früchten, wobei jedem Pflückaggregat zumindest eine antreibbare Stängelstütze zugeordnet ist, die höhenmäßig beabstandet zum Pflückaggregat und zu den Schneidvorrichtungen angeordnet ist.

Ein gattungsgemäßes Vorsatzgerät in Gestalt eines Maispflückers ist aus der Schrift EP 1 106 049 A1 bekannt. Mit dem dort offenbarten Vorsatzgerät ist es möglich, in Reihen ausgesätes stängeliges Halmgut zu ernten, indem das Erntegerät, an dem das Vorsatzgerät befestigt ist, ganz genau an den Reihen entlang über das Feld bewegt wird. Mit dem bekannten Vorsatzgerät ist es nur unter Inkaufnahme erhöhter Verluste von Erntegut möglich, weniger genau an den Reihen entlang oder sogar unabhängig von den Reihen das stängelige Halmgut zu ernten. Weitere Schriften zum Stand der Technik sind die WO 95/17807 und WO 2007/066161 A1.

Es ist die Aufgabe der vorliegenden Erfindung, einen Vorsatz zu schaffen, bei dem die Verluste an stängeligem Halmgut geringer ausfallen, wenn das Vorsatzgerät nicht genau entlang den Pflanzenreihen geführt wird.

Die Aufgabe wird für ein gattungsgemäßes Vorsatzgerät durch die kennzeichnenden Merkmale des Anspruchs 1 gelöst..

Durch die erfindungsgemäße Stängelstütze ist es möglich, einen zu erntenden Pflanzenstängel in einem größeren Abstand zum Boden abzustützen, so dass dieser vom in den Erntegutbestand hineinbewegten Vorsatzgerät nicht ganz oder teilweise niedergedrückt und überfahren wird.

Durch die Antreibbarkeit der Stängelstütze wird gewährleistet, dass ein zu erntender Stängel auch bei einer Vorfahrtbewegung der Erntemaschine weiter abgestützt wird, obwohl sich die Relativposition des Erntegutstängels im Verhältnis zum Vorsatzgerät durch die Vorfahrtbewegung ändert. Die antreibbare Stängelstütze ist also ein aktives Stützorgan, das seinen Aufstützpunkt des Pflanzenstängels an der Stängelstütze durch die Antreibbarkeit verlagern kann.

Durch die Vorordnung der Stängelstütze vor das zugehörige Pflückaggregat ist eine Abstützung des Pftanzenstängels möglich, bevor der Pflanzenstängel vom Pflückaggregat erfasst und bearbeitet wird. Dadurch ist die Abstützwirkung besonders effektiv, und es ist möglich, die antreibbare Stängelstütze dazu zu nutzen, den abgestützten Teil des Pflanzenstängels auf das Pflückaggregat zuzubewegen.

Durch den höhenmäßigen Abstand der antreibbaren Stängelstütze zum Pflückaggregat und auch zu den Schneidvorrichtungen können Hebelkräfte aufgebaut werden, die einem Abknicken und Beiseiteschieben eines Pflanzenstängels durch den Halmteiler und/oder den Schneidvorrichtungen entgehen wirken. Dabei können die Stängelstützen in einer Höhe angeordnet sein, in der sich eine gute Abstützwirkung auf die Pflanzenstängel ergibt, allerdings die Pflahzenstängel auch noch eine ausreichende Festigkeit aufweisen, um die von der Stängelstütze auf die Pflanze übertragenden Stützkräfte auf die darunter liegenden Stängelteile zu übertragen. Der höhenmäßige Abstand der antreibbaren Stängelstütze zum Pflückaggregat und den Schneidvorrichtungen sollte deshalb mindestens die halbe Höhe des zu erntenden Halmguts oder mehr betragen, weil in dieser Höhe die Festigkeit des Stängels noch ausreicht, aber auch brauchbare Stützkräfte aufgebaut werden können. Eine wirksame Abstützung an den oberen Spitzen der Maispflanzen ist schwierig, da der Pflanzenstängel dort zu weich und flexibel ist und die Maispflanze bei einer Abstützung in diesem Bereich wegzukippen droht.

Die Stängelstütze ist in Längsrichtung und/oder in ihrer Höhe und/oder in ihrem Anstellwinkel verlagerbar und/oder in ihrer Drehzahl verstellbar. Die Verstellbarkeit in Längsrichtung bedeutet, dass die Stängelstütze in Fahrtrichtung oder Einzugsrichtung des Vorsatzgerätes verstellbar ist. Durch die Höhenverstellung wird der vertikale Abstand der Stängelstütze zu den Schneidvorrichtungen und dem Pflückaggregat verändert. Bei einer Verstellung des Anstellwinkels wird die räumliche Lage der Stängelstütze um eine Querachse verändert. Bei einer Verstellung der Drehzahl verändert sich die Umlaufgeschwindigkeit der Stängelstütze. Durch die Verstellbarkeit der genannten Parameter ist die Stängelstütze individuell an das jeweilige Erntegut anpassbar, die Abstützwirkung kann dadurch verbessert werden. Dabei ist es vorstellbar, dass jede Stängelstütze für sich allein, aber auch mehrere oder alle Stängelstützen zusammen verstellbar sind.

Im Ergebnis ist es durch die Abstützung von Pflanzenstängeln mittels der antreibbaren Stängelstützen möglich, die Pflanzenstängel länger in einer zumindest annähernd aufrechten Position zu halten, bis sie von den Schneidvorrichtungen des Vorsatzgerätes erfasst und abgeschnitten werden. Durch die Stängelstützen ist es außerdem möglich, die Pflanzenstängel einem zugehörigen Pflückaggregat zuzuordnen, so dass die Pflanze infolge der Abstützung in den Schneidbereich des zugehörigen Pflückaggregates einläuft, dort geschnitten und sodann vom Pflückaggregat erfasst und bearbeitet wird. Auf diese Weise wird das Risiko verringert, dass sich zu erntende Pflanzenstängel quer vor den Einlaufbereich eines oder mehrerer Pflückaggregate legen und dadurch die Zuführung nachfolgender Pflanzenstängel behindern. Da die Pflanzenstängel von der antreibbaren Stängelstütze zumindest annähernd aufrecht stehend abgestützt sind, wird ein Querlegen der Pflanzenstängel vor dem Einlaufbereich eines Pflückaggregates vermieden.

Nach einer Ausgestaltung der Erfindung sind in Fahrtrichtung des Vorsatzgeräts die Halmteiler den antreibbaren Stängelstützen über ihre ganze oder zumindest über einen Teil ihrer Baulänge vorgeordnet und die Schneidvorrichtungen den antreibbaren Stängelstützen nachgeordnet. Die Begriffe "vorgeordnet" und "nachgeordnet" bedeuten, dass die entsprechenden Bauteile räumlich so angeordnet sind, dass in den Wirkbereich des Vorsatzgerätes einlaufende Pflanzenstängel zuerst mit den Halmteilern in Kontakt kommen können, danach von der Stengelstütze erfasst und danach von den Schneidvorrichtungen geschnitten werden.

Wird das Vorsatzgerät so genau an einer Pflanzenreihe entlang geführt, dass die Pflanzenstängel genau auf die Schneideinrichtung zulaufen, oder wurden die Maispflanzen in Breitsaat gesät oder das Vorsatzgerät wird schräg oder quer zu einer Pflanzenreihe bewegt und ein Pflanzenstängel läuft genau auf eine Schneidvorrichtung zu, gelangen die Pflanzenstängel nicht mit den Halmteilern in Kontakt. Hierbei handelt es sich um eine unproblematische Idealsituation, in der die Pflanzenstängel nur von den Stängelstützen erfasst werden sollen, bevor sie geschnitten werden. Eine zwangsweise Zuordnung eines Pflanzenstängels zu einem Pflückspalt ist in dieser Idealsituation nicht erforderlich.

Schwierig sind jedoch die Fälle, in denen ein zu erntender Pflanzenstängel nicht genau auf eine Schneidvorrichtung zuläuft. In diesem Fall bewirkt der erste Kontakt eines Pflanzenstängels mit dem Halmteiler durch seine spitz zulaufende Form zunächst eine eindeutige zwangsweise Zuordnung des jeweiligen Pflanzenstängels zu einer dem Halmteiler nachgeordneten Schneideinrichtung. Erst nachdem beim Vorschub des Vorsatzgeräts in den Erntegutbestand durch den Halmteiler geklärt ist, von welcher Schneidvorrichtung der Pflanzenstängel geschnitten und von welchem zugehörigen Pflückaggregat die Maiskolben gepflückt werden, gelangt der Pflanzenstängel in den Wirkbereich der Stängelstützen, die den Pflanzenstängel durch ihre räumliche Zuordnung zu einer Schneidvorrichtung und einem Pflückspalt gezielt auf diese Maschinenaggregate zu führen und abstützen können. Erst dann, wenn die Pflanzenstängel von den Stängelstützen abgestützt sind, werden sie von der zugehörigen Schneidvorrichtung geschnitten und dem dieser Schneidvorrichtung nachgeordneten Pflückaggregat zugeführt. Daraus ergibt sich für einen nicht genau auf eine Schneidvorrichtung zulaufenden Pflanzenstängel die Kontaktreihenfolge - erster Kontakt mit dem Halmteiler zur Zuordnung zu einer Schneideinrichtung, - zweiter Kontakt mit der oder den Stängelstützen und danach als - dritter Kontakt der Schnitt des Stängels.

Diese Kontaktreihenfolge schließt nicht aus, dass sich die jeweiligen Kontaktphasen überlappen können. So kann ein Pflanzenstängel noch vom Halmteiler berührt werden, wenn er erstmals von der oder den Stängelstützen berührt wird, und der Pflanzenstängel kann auch geschnitten werden, während noch Teile der geschnittenen Pflanze den Halmteiler berühren. Die Abstützung des Pflanzenstängels zumindest während des Schnitts, eventuell auch noch danach, ist ein Teil dieser Erfindung.

Nach einer Ausgestaltung der Erfindung ist mindestens eine der Stängelstützen mit einem hydraulischen oder elektrischen Motor antreibbar, der mit der Stängelstütze wirkverbunden ist, und die Versorgungsleitung zur antriebsmäßigen Versorgung des Motors mit hydraulischer oder elektrischer Energie ist entlang eines schwenkbaren Haltearms verlegt. Durch elektrische oder hydraulische Motoren kann auf schwere Antriebswellen und Getriebe verzichtet werden, die durch ihre sonst vorne im Vorsatzgerät erforderliche Anordnung die Vorderachse des Tragfahrzeugs mit Hebelwirkung übermäßig belasten würden. Zudem sind elektrische oder hydraulische Antriebe leicht von einer entfernten Bedienposition aus schalt- und regelbar. Die Wirkverbindung bedeutet, dass der hydraulische oder elektrische Motor direkt oder indirekt mindestens eine Stängelstütze antreibt.

Nach einer Ausgestaltung der Erfindung ist die Stängelstütze in einer Höhe oberhalb der Fruchtstände des Halmgutes angeordnet. Durch die Anordnung der Stängelstütze in dieser Höhe wird vermieden, dass durch den Kontakt der Stängelstütze mit den Fruchtständen diese vom Pflanzenstängel abgetrennt und zu Boden fallen können, bevor diese vom Vorsatzgerät erfasst und abgefördert worden sind.

Nach einer Ausgestaltung der Erfindung bewegt die Stängelstütze von ihr abgestütztes Halmgut bei einer Förderbewegung entlang eines mittels der Stängelstütze vorgegebenen Förderweges auf das zugehörige Pflückaggregat zu. Die Stängelstütze kann dazu insbesondere über Aufnahmetaschen oder sonstige Mitnehmer verfügen, in denen ein Pflanzenstängel abgestützt ist und in denen bei einer Förderbewegung der Stängelstütze der Pflanzenstängel auf das zugehörige Pflückaggregat zu bewegbar ist. Die Umlaufbahn der Stängelstütze, die je nach Ausgestaltung als Scheibe oder Kettenförderer kreisrund, aber auch elliptisch oder auf sonstige Weise umlaufend gestaltet sein kann, und die Aufnahmetaschen beziehungsweise Mitnehmer definieren einen Förderweg, an dem entlang Pflanzenstängel geführt werden, die von der Stängelstütze abgestützt sind. Durch die Hinführung eines von der Stängelstütze abgestützten Pflanzenstängels auf das Pflückaggregat zu während des Zeitraums, in dem sich der Pflanzenstängel an der Stängelstütze abstützt, werden eventuelle Erntegutverluste verringert und die Zuführung der Pflanzenstängel zu dem zugehörigen Pflückaggregat wird sinnvoll unterstützt.

Nach einer Ausgestaltung der Erfindung sind die Stängelstütze und der durch die Stängelstütze definierte Förderweg in ihrer räumlichen Lage im Verhältnis zur zugehörigen Schneidvorrichtung räumlich so einstellbar, dass ein von der Stängelstütze über den Verlauf des Förderwegs abgestützter Pflanzenstängel vor, während und nach dem Schneidvorgang durch die Schneidvorrichtung abgestützt ist. Die zugehörige Schneidvorrichtung ist diejenige Schneidvorrichtung, von der ein von der entsprechenden Stängelstütze abgestützter Pflanzenstängel geschnitten wird. Die Erntegutverluste und Gutflussstörungen können insbesondere vermindert werden, wenn die Stängelstütze und der durch sie vorgegebene Förderweg so eingestellt sind, dass der zu schneidende Pflanzenstängel bereits vor dem Schnitt von der Stängelstütze abgestützt ist, hierdurch werden unkontrollierte Bewegungen des Pflanzenstängels kurz vor dem Schnitt vermieden. Dieser Effekt hält an, wenn der Pflanzenstängel während des Schnitts abgestützt bleibt, und der Pflanzenstängel kann kontrollierter abgefördert und an das Pflückaggregat übergeben werden, wenn die Abstützung auch noch zumindest eine kurze Zeit nach dem Schnitt aufrecht erhalten bleibt. Die Einstellung der räumlichen Lage kann über die Verstellung der Höhe, der Länge und/oder des Anstellwinkels erfolgen, zusätzlich kann noch die Drehzahl passend einstellbar sein.

Nach einer Ausgestaltung der Erfindung decken die Schneidvorrichtungen und/oder die Fördervorrichtungen die gesamte oder zumindest nahezu die gesamte Arbeitsbreite des Vorsatzgerätes in Fahrtrichtung ab. Unter einer zumindest nahezu gesamten Abdeckung der Arbeitsbreite des Vorsatzgerätes ist eine Abdeckung von mindestens 80 % der Arbeitsbreite gemeint. Durch diese Ausgestaltung des Vorsatzgerätes ist es möglich, das Vorsatzgerät für eine reihenunabhängige Ernte des Erntegutbestandes zu nutzen. Indem die Schneidvorrichtungen und/oder die Fördervorrichtungen die gesamte Arbeitsbreite des Vorsatzgerätes in Fahrtrichtung abdecken, kann ein Erntegutstängel an beliebiger Stelle des Vorsatzgerätes erfasst, geschnitten und abgefördert werden. Es ist dann nicht mehr erforderlich, den Erntegutstängel ganz genau an einer bestimmten einem zugehörigen Pflückaggregat zugeordneten Schnittstelle abzuschneiden und abzufördern, wie dies bei den reihenabhängig arbeitenden Vorsatzgeräten erforderlich ist. Da die Pflanzenstängel beim Schneiden und Abfördern bis zum zugehörigen Pflückaggregat von einer Stängelstütze im oberen Bereich des Pflanzenstängels abgestützt sind, ist eine Beförderung des Pflanzenstängels quer oder schräg zur Einzugsrichtung des Halmguts möglich, ohne dabei erhöhte Erntegutverluste in Kauf nehmen zu müssen. Dadurch kann ein Pflanzenstängel auch an einer gegenüber dem herkömmlichen Stand der Technik entfernter liegenden Stelle geschnitten und anschließend bis zum zugehörigen Pflückspalt transportiert werden, ohne dass sich Pflanzenstängel dabei in erheblicher Zahl querlegen und den Gutfluss im Vorsatzgerät blockieren können oder vom Vorsatzgerät überfahren werden und dadurch verlustig gehen.

Nach einer Ausgestaltung der Erfindung ist die Stängelstütze in Einzugsrichtung des Halmguts in das Vorsatzgerät gesehen hinter der Spitze eines zugehörigen Halmteilers angeordnet. Durch diese Anordnung wird sichergestellt, dass zunächst die auf dem Feld stehenden Pflanzenstängel von den Halmteilern jeweils einem Einzugsbereich für ein Pflückaggregat zugeordnet werden. Ein Pflanzenstängel, der von einem Halmteiler getroffen wird, passiert diesen bei einer weiteren Vorfahrtsbewegung des Vorsatzgerätes in den Pflanzenbestand hinein mit dem größten Teil der Pflanze entweder auf der rechten oder linken Seite des Halmteilers. Ein Pflanzenstängel kann vom Halmteiler auch so getroffen werden, dass der Stängel mehr oder weniger stark zur Seite gedrängt wird, in diesem Fall neigt sich der Pflanzenstängel dann in eine mehr oder weniger ausgeprägte Schräglage. In genau diesem Fall ist es vorteilhaft, wenn unmittelbar nach dem Zuordnen eines Pflanzenstängels zu einem Pflückspalt ein sich schräg neigender Pflanzenstängel von der antreibbaren Stängelstütze abgestützt wird, um ein weiteres Absinken des Pflanzenstängels in eine zunehmende Schräglage bis hin zu einer völligen Querlage zu verhindern. Dabei wird ein sich zu neigen beginnender Pflanzenstängel von der Stängelstütze abgestützt, die einem zugehörigen Pflückaggregat vorgeordnet ist. Somit ergibt sich bei der Vorfahrtbewegung eines Vorsatzgerätes bei dieser Ausgestaltung der Erfindung die folgende Abfolge:
- durch das Hineinfahren des Halmteilers in einen Pflanzenbestand entscheidet sich an der Spitze des Halmteilers, ob ein Pflanzenstängel einem rechts oder links zum Halmteiler angeordneten Pflückaggregat zugeordnet wird,
- unmittelbar nach dieser Zuordnung gelangt der Pflanzenstängel in den Wirkbereich der antreibbaren Stängelstütze, durch die ein zugeordneter Pflanzenstängel in einer zumindest annähernd aufrechten Stellung gestützt und gehalten wird,
- danach kann dieser Pflanzenstängel von den Schneidvorrichtungen abgeschnitten und sodann dem zugehörigen Pflückaggregät zugeführt und bearbeitet werden.

Durch die vorstehend beschriebene Abstützung der Pflanzenstängel mit der Stängelstütze können sich die Pflanzenstängel nicht mehr so leicht in eine Schrägoder Querlage bewegen, nachdem sie von einem Halmteiler getroffen wurden. Zudem ist es leichter möglich, die geschnittenen Stängel quer oder schräg zur Einzugsrichtung des Ernteguts in das Vorsatzgerät hinein zu transportieren. Dadurch muss das Vorsatzgerät nicht mehr genau entlang der Pflanzreihe des Ernteguts geführt werden, der Pflanzenstängel kann auch in einer zum Pflückaggregat/Pflückspalt entfernter liegenden Position geschnitten und abgestützt zum Pflückaggregat befördert werden, ohne dass erhöhte Erntegutverluste oder Gutflussblockaden durch quer liegende Pflanzenstängel auftreten. Die Handhabung des Vorsatzgerätes wird dadurch erleichtert.

Nach einer Ausgestaltung der Erfindung sind einem Pflückaggregat zwei gegenläufig antreibbare Stängelstützen zugeordnet, die jeweils eine rechts und eine links von der Längsmittelachse des Pflückaggregats gelegene Teilarbeitsbreite des Vorsatzgerätes abdecken. Die Längsmittelachse des Pflückaggregats wird vom Pflückspalt defniert. Dadurch ist es möglich, über eine breite Teilarbeitsbreite zu beiden Seiten eines Pflückspaltes die Stützfunktion realisieren zu können, ohne dadurch allzu lange Transportwege in Kauf nehmen zu müssen. Jede Stängelstütze kann dem Pflückaggregat Halmgut von ihrer jeweiligen Seite der Längsmittelachse zufördern.

Nach einer Ausgestaltung der Erfindung überdecken sich die Hüllkurven der Bewegungsbahnen der beiden Stängelstützen einander teilweise. Durch die teilweise Überdeckung werden Lücken vermieden, in denen Pflanzenstängel nicht abgestützt wären. Zudem können bei dieser Lösung Pflänzenstängel nicht so leicht aus den Aufnahmetaschen in Fahrtrichtung herausfallen, da der Bereich nach vorn durch die sich teilweise überdeckenden Stängelstützen gesperrt ist.

Nach einer Ausgestaltung der Erfindung ist die Fördergeschwindigkeit der Stängelstütze gleich oder größer der Vorfahrtgeschwindigkeit des Vorsatzgerätes. Bei dieser Ausgestaltung des Vorsatzgerätes wird vermieden, dass ein von der Stängelstütze abgestützter Pflanzenstängel durch eine niedrigere Fördergeschwindigkeit der Stängelstütze in eine zu starke Schräglage gerät. Grundsätzlich ist es wünschenswert, einen geschnittenen Pflanzenstängel möglichst in seiner vertikalen Stellung zu halten, bis er von dem Pflückaggregat erfasst wird, da es bei einer zunehmenden Schrägstellung des Pflanzenstängels immer schwieriger wird, den Pflanzenstängel während einer Förderbewegung kontrolliert zu halten. Zu berücksichtigen ist auch, dass mit dem Vorsatzgerät unterschiedlichstes Erntegut zu ernten ist. So können Maispflanzen als Beispiel für stängeliges Halmgut Höhenmaße zwischen 2 m und 4 m bei unterschiedlich dicken Stängeln und unterschiedlich schweren Maiskolben mit mehr oder weniger dichtem Blattwerk aufweisen. Um trotz dieser erheblichen Varianz des Erntegutes unter allen Bedingungen eine möglichst sichere Abförderung der geschnittenen Pflanzenstängel zu ermöglichen, sollten die Relativbewegungen zwischen dem Vorsatzgerät und dem zu erntenden Pflanzenstängel nach dessen Schnitt möglichst gering gehalten werden. Diesem Zweck dient die hier vorgeschlagene Ausgestaltung.

Nach einer Ausgestaltung der Erfindung ist die Stängelstütze als Rotationskörper mit mehreren Aufnahmetaschen ausgebildet. Durch die Ausbildung der Stängelstütze als Rotationskörper kann die Stütz- und Förderfunktion der Stängelstütze auf ideale Weise miteinander kombiniert werden. Durch eine rotierende Umlaufbewegung der Stängelstütze ist es möglich, in einer gleich bleibenden Taktzahl bereits geschnittene Stängel abzufördern, an einem Abgabepunkt abzugeben und nach dem Rücklauf auf der Rückseite der Stängelstütze wieder einen neuen Pflanzenstängel zur Abstützung anzunehmen. Die Stängelstütze kann als rotierende Scheibe mit einer Kreisform ausgebildet sein, es ist aber auch möglich, den Rotationskörper beispielsweise als Kettenförderer oder Riemenförderer mit einer nicht kreisrunden Bewegungsbahn auszugestalten. Durch die taschenartige Ausformung werden abgestützte Pflanzenstängel sicher erfasst und können nicht so leicht wieder aus der Aufnahmetasche herausfallen.

Nach einer Ausgestaltung der Erfindung ist auf der in Rotationsrichtung nacheilenden Seite der Aufnahmetaschen jeweils ein in Rotationsrichtung vorauseilend ausgestalteter Vorsprung ausgeformt. Durch die Ausbildung von Vorsprüngen an Aufnahmetaschen der Stängelstütze werden einzelne Aufnahmeräume definiert, in denen ein oder mehrere Pflanzenstängel von einer Stängelstütze abgestützt werden können. Durch die Ausformung eines in Rotationsrichtung vorauseilend ausgestalteten Vorsprungs an einer Aufnahmetasche können in der Aufnahmetasche befindliche Pflanzenstängel besonders gut bei einer Beschleunigung der Pflanzenstängel in Abförderrichtung abgestützt werden. Ein so geformter Vorsprung hintergreift bei einer Rotationsbewegung einen in der Aufnahmetasche befindlichen Pflanzenstängel und stützt ihn dadurch zuverlässiger ab. Der Vorsprung kann beispielsweise als ein hakenförmiger Finger ausgebildet sein. Ein so gestalteter Vorsprung sichert die in einer Aufnahmetasche aufgenommenen Pflanzenstängel zusätzlich davor, quer zur Förderrichtung der Stängelstütze aus der Aufnahmetasche herauszufallen.

Nach einer Ausgestaltung der Erfindung weist die Zerkleinerungsvorrichtung rotierende Messer auf, die auf einer Welle angeordnet sind, die parallel zum Pflückspalt verläuft, und die mit ihren Schneidkanten in den Hüllkreis eines oder mehrerer Einzugsrotoren hineinragen. Derart angeordnete Messer haben sich als sehr zuverlässig, leistungsfähig, effektiv und störungsunempfindlich erwiesen und lassen sich gut mit der hier vorgeschlagenen Stütz- und Einzugstechnik für die Pflanzenstängel kombinieren.

Nach einer Ausgestaltung der Erfindung weisen eine oder mehrere Stängelstützen einen oder mehrere um eine vertikale oder zumindest annähernd vertikale Drehachse rotierend antreibbaren Rotationskörper auf. Durch die genau vertikale oder zumindest annähernd vertikale Drehachse erzeugen die Rotationskörper einen Förderimpuls in einer zur Drehachse rechtwinkligen Wirkrichtung, die dann horizontal oder zumindest annähernd horizontal ausgerichtet ist. Je stärker die Drehachse von der vertikalen Richtung abweicht, umso kürzer wird bei gleichen Abmessungen des Rotationskörpers der Förderimpuls in horizontaler Richtung. Die von Stängelstützen abgestützten Stängel können von den Rotationskörpern um ihren Außenumfang herum in der Summe entgegen der Vorfahrtrichtung der Erntemaschine in Förderrichtung der Einzugsorgane befördert werden. Die Rotationskörper beschränken sich auf diese Weise nicht auf eine statisch wirkende Abstützung, sondern können zusätzlich die abgestützten Stängel in Richtung auf die Förderorgane des Vorsatzgeräts zu befördern. Die kontinuierliche Be- und Abförderung der abgestützten Stängel verhindert, dass sich bei höheren Vorfahrtgeschwindigkeiten der Erntemaschine vor den Stängelstützen ein dichtes Paket von zusammengeschobenen Pflanzenstängeln und -blättern bildet, bei dem die weiter von den Stängelstützen entfernten Pflanzenstängel abgeknickt werden könnten, ohne in den Mitnahmebereich der Stängelstützen gelangt zu sein. Im Abstützbereich entsteht vielmehr ein kontrollierter Gutfluss, bei dem nach der Kontaktierung des Pflanzenstängels mit der Stängelstütze der erfasste Pflanzenstängel aus dem Kontaktbereich abgefördert wird, um dadurch die Annahmezone für den nächsten anzunehmenden Pflanzenstängel frei zu machen. Das Risiko von wegknickenden Pflanzenstängeln, die nicht mehr von der Stängelstütze erfasst werden, ist dadurch erheblich verringert.

Es wird ausdrücklich darauf hingewiesen, dass die vorstehend beschriebenen Ausgestaltungen der Erfindung jeweils für sich, aber auch wahlweise untereinander mit dem Gegenstand des Hauptanspruches kombinierbar sind, soweit sie nicht von Merkmalen einer anderen Ausgestaltung abhängig sind.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Seitenansicht auf ein Vorsatzgerät,
- Fig. 2 - 5:: den Ablauf des Einzugs eines Pflanzenstängels in das Vorsatzgerät,
- Fig. 6:: einen Pflückvorgang aus einer Ansicht von vorne,
- Fig. 7:: eine abgewandelte Version der in Fig. 6 gezeigten Zerkleinerungstechnik,
- Fig. 8:: eine Ansicht auf ein Vorsatzgerät von oben,
- Fig. 9:: eine Seitenansicht auf ein an einen Mähdrescher angebautes Vorsatzgerät,
- Fig. 10 - 13:: verschiedene Positionen einer Stängelstütze, und
- Fig. 14:: eine Ansicht auf mehrere Stängelstützen von oben.

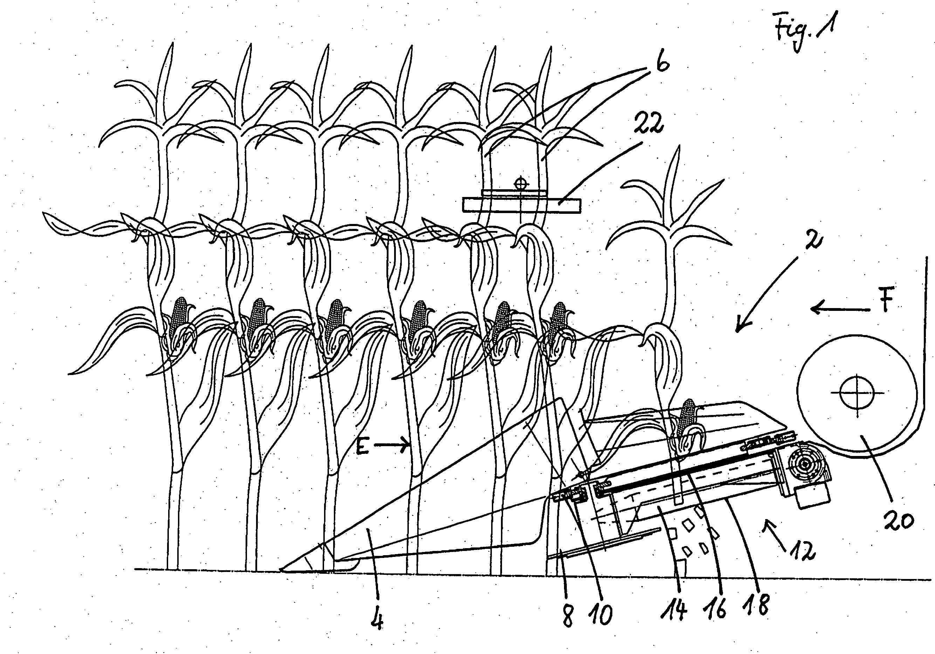

In Fig. 1 ist ein Vorsatzgerät 2 in einer Seitenansicht zu sehen. Das Vorsatzgerät 2 wird in Fahrtrichtung F in den Bestand des Halmguts gefahren, im Ausführungsbeispiel einem Maisfeld. Am in Fahrtrichtung F gesehen vorderen Ende des Vorsatzgeräts 2 befindet sich der Halmteiler 4, durch den die Stängel des Halmguts 6 in Querrichtung auf ein rechts oder links hinter dem Halmteiler 4 befindliches Pflückaggregat 12 gedrückt werden, wenn sie mit dem Halmteiler 4 in Kontakt kommen. Bei einem Vorsatzgerät 2 können mehrere Pflückaggregate nebeneinander angeordnet sein, um größere Arbeitsbreiten zu erreichen, beispielsweise 6, 8, 10 oder mehr Pflückaggregate 12, deren Einzugsbereiche jeweils durch Halmteiler 4 voneinander getrennt sind. Die Pflanzenstängel werden bodennah von der Schneideinrichtung 8 geschnitten, dann werden die Stängel von einer Fördervorrichtung 10 erfasst und in Einzugrichtung E in das Vorsatzgerät 2 eingezogen.

Wenn die Pflanzenstängel in den Wirkbereich des Pflückaggregats 12 gelangen, wird der Pflanzenstängel von einer oder mehreren Pflückwalzen 14 erfasst und nach unten gerissen Dabei wird der Pflanzenstängel von einer Zerkleinerungsvorrichtung 18 zerkleinert. Die Zerkleinerungsvorrichtung 18 kann aus feststehenden oder rotierenden Messern oder auf die Pflückwalzen 14 aufgesetzten Messerleisten bestehen. Die Fruchtstände einer Pflanze, im Ausführungsbeispiel die Maiskolben, werden am Pflückspalt 16 vom Pflanzenstängel abgerissen, weil der Pflückspalt 16 so eng bemessen ist, dass die Pflückwalzen 14 zwar den Stängel durch den Pflückspalt 16 hindurch ziehen können, nicht jedoch die Maiskolben. Die abgerissenen Maiskolben werden von der Fördervorrichtung 10 in den Bereich der Sammelvorrichtung 20 befördert, im Ausführungsbeispiel einer Förderschnecke.

Dem Pflückaggregat 12 ist in Fahrtrichtung F eine Stängelstütze 22 vorgeordnet. Die Stängelstütze 22 ist durch eine entsprechende Halterung in ihrer Position gehalten und mit dem übrigen Vorsatzgerät 2 verbunden, die aus zeichnerischen Vereinfachungsgründen nicht näher dargestellt ist. An der Halterung kann auch die Technik für den Antrieb der Stängelstütze 22 angebracht sein. Die Stängelstütze 22 ist höhenmäßig beabstandet zum Pflückaggregat 12 und der Schneidvorrichtung 8. Eine Arbeitshöhe von mindestens einem Meter Abstand zum Boden ist vorteilhaft. In Einzugsrichtung E des Halmguts 6 in das Vorsatzgerät 2 ist die Stängelstütze 22 hinter der Spitze des Halmteilers 4 angeordnet. Im Ausführungsbeispiel ist der höhenmäßige Abstand der Stängelstütze 22 zu den übrigen Organen des Vorsatzgerätes 2 so groß, dass sie höher ist als die Fruchtstände des zu erntenden Halmguts 6. In Fig. 1 ist erkennbar, dass sich zwei Pflanzenstängel im Wirkbereich der Stängelstütze 22 befinde.

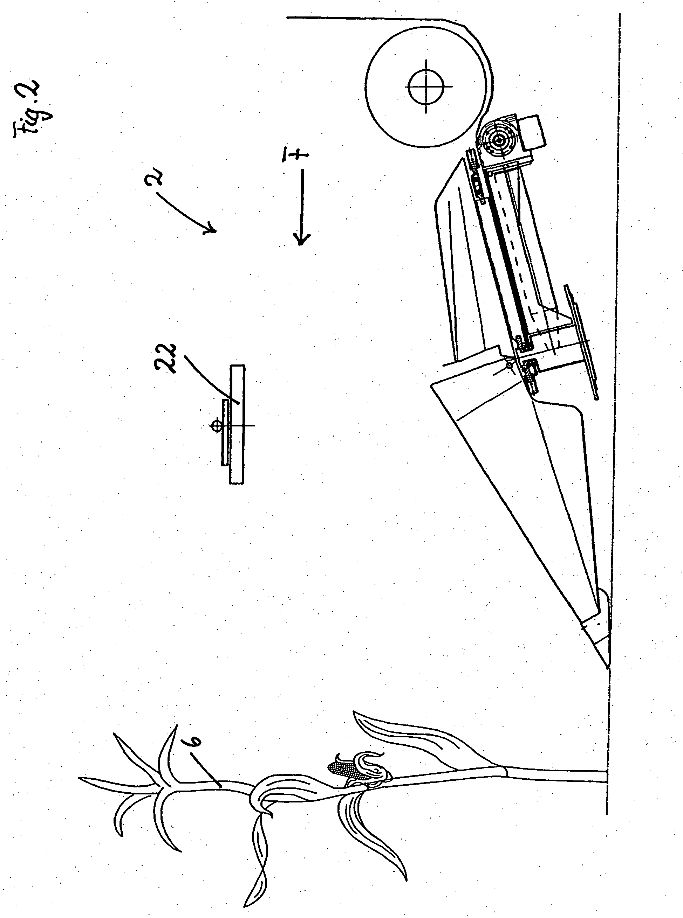

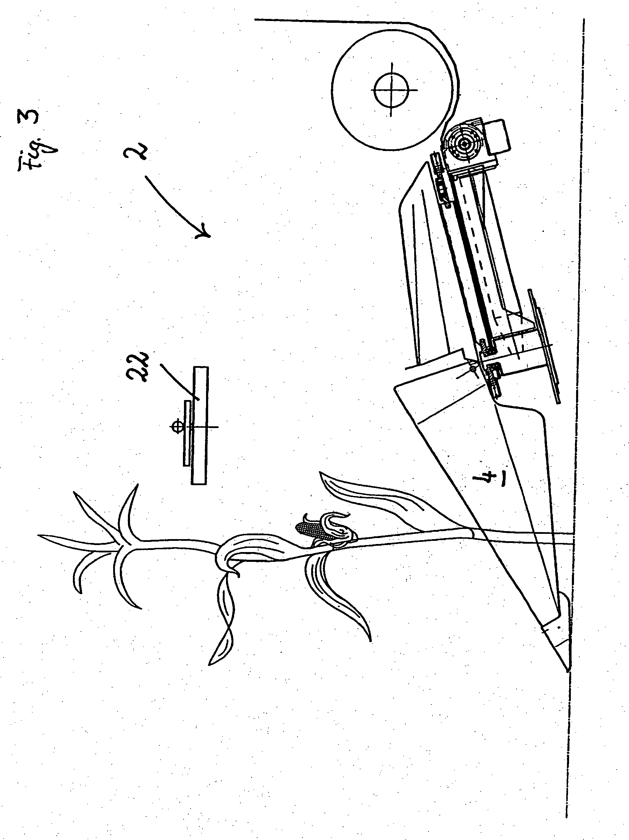

In den Fg. 2 - 5 wird gezeigt, wie ein Pflanzenstängel in das Vorsatzgerät 2 einläuft. Das Vorsatzgerät 2 wird in Fig. 2 in Fahrtrichtung F auf einen Pflanzenstängel eines Halmgutes 6 zu bewegt. In Fig. 3 hat das Vorsatzgerät 2 mit der Teilerspitze des Halmteilers 4 bereits den Pflanzenstängel passiert. Dadurch ist der Pflanzenstängel dem Einzugsbereich eines bestimmten Pflückaggregats 12 zugeordnet. Der Pflanzenstängel ist aber noch nicht von der Stängelstütze 22 erfasst worden.

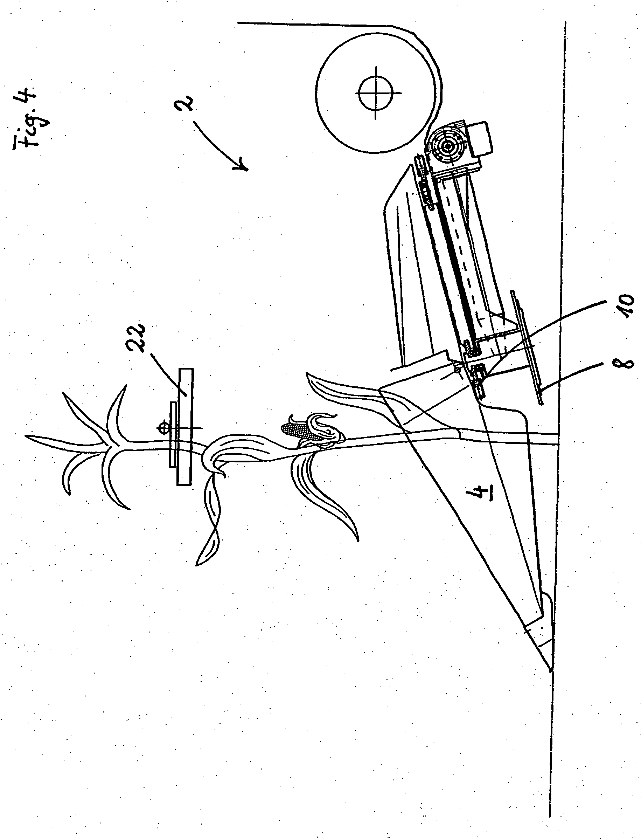

In Fig. 4 ist das Vorsatzgerät 2 weiter in Fahrtrichtung F bewegt worden, so dass inzwischen der Pflanzenstängel vom vorderen Bereich der Stängelstütze 22 erfasst und abgestützt ist. Bei einer weiteren Vorfahrt des Vorsatzgeräts 2 wird der obere Teil des Pflanzenstängels von der Stängelstütze 22 durch ihre Rotationsbewegung im oberen Bereich weiter in Einzugsrichtung E und gegebenenfalls auch auf das Pflückaggregat 12 zu befördert, während der untere Teil des Stängels in den Wirkbereich der Schneidvorrichtüng 8 gelangt. Diese schneidet den Stängel je nach Höheneinstellung des Vorsatzgeräts 2 klapp oberhalb des Bodens ab. Unmittelbar danach gelangt der Stängel in den Wirkbereich der Fördervorrichtung 10 und des Pflückaggregats 12, wodurch der Pflanzenstängel sicher erfasst ist und keiner weiteren Abstützung bedarf.

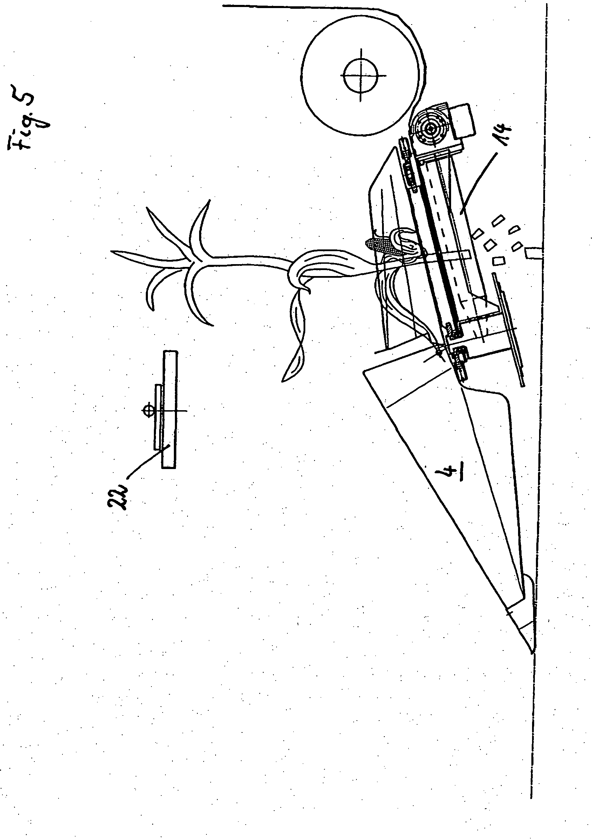

In der Darstellung in Fig. 5 hat der Pflanzenstängel schließlich das Pflückaggregat 12 erreicht und wird von der Pflückwalze 14 nach unten gerissen. In dieser Phase ist es nicht mehr erforderlich, den Pflanzenstängel mit der Stängelstütze 22 abzustützen. Der Maiskolben oder ein anderer Fruchtstand kann auf herkömmliche Weise vom Stängel getrennt und abgefördert werden.

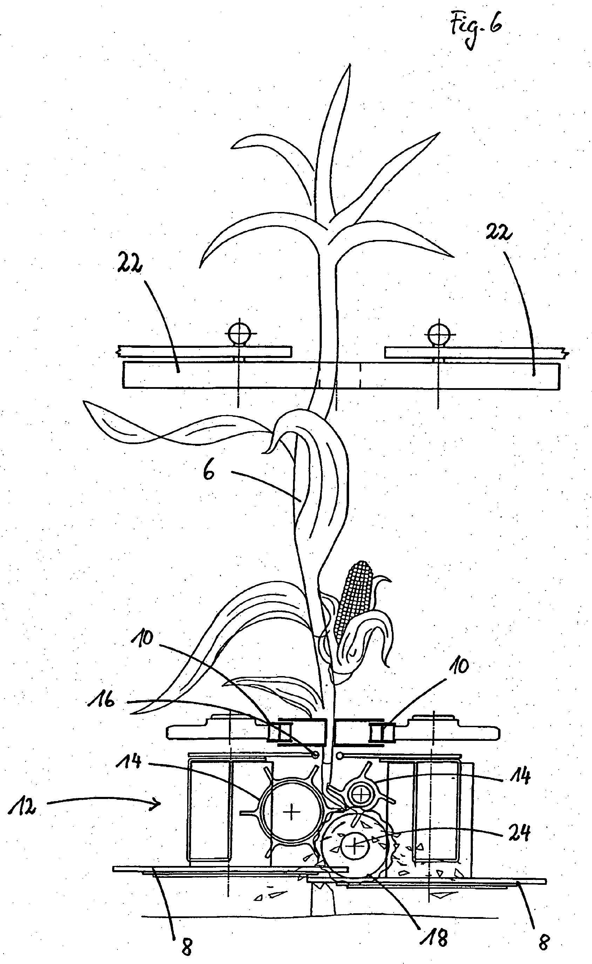

Fig. 6 zeigt ein Pflückaggregat 12 aus einer Ansicht von vorne bei einem Pflückvorgang. Höhenmäßig beabstandet zum Pflückeraggregat 12 finden sich zwei Stängelstützen 22, die teilweise ineinander kämmen und die jeweils eine Teilarbeitsbreite rechts und links des Pflückspaltes 16 und damit der Längsmittelachse des zugehörigen Pflückaggregats 12 überdecken. Aus der Ansicht in Fig. 6 ist gut erkennbar, dass der Pflanzenstängel nicht nach vorn in Fahrtrichtung aus dem Vorsatzgerät 2 herausfallen kann.

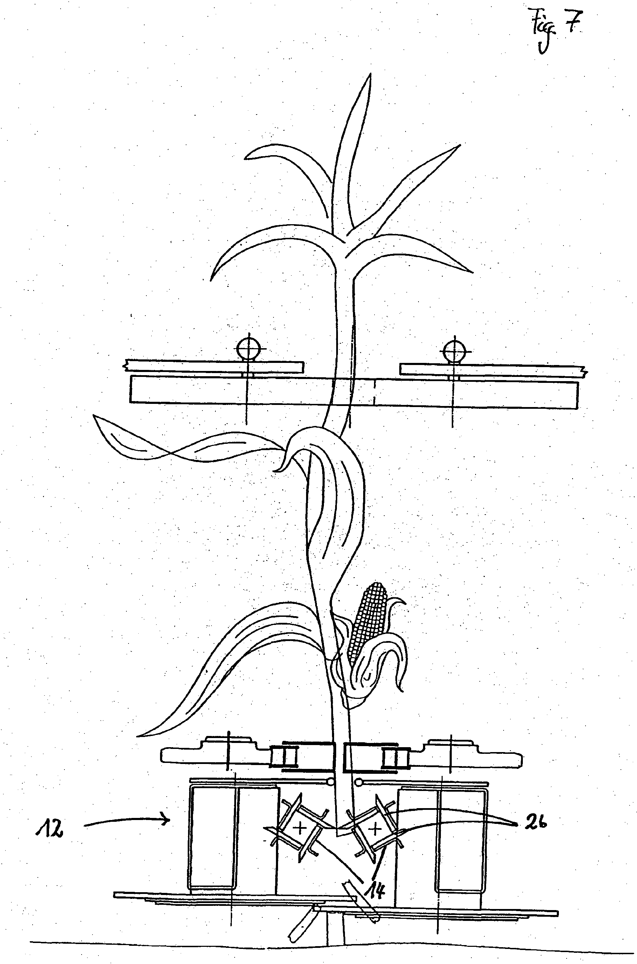

Die in Fig. 6 gezeigte Zerkleinerungsvorrichtung 18 weist rotierende Messer in Gestalt von mehreren in einem Abstand zueinander auf einer parallel zum Pflückspalt 16 verlaufenden Welle 24 angeordnete Messerscheiben auf, die mit ihren Schneidkanten in den Hüllkreis eines oder mehrerer Pflückwalzen 14 als Einzugsrotoren hineinragen. Die Schneidvorrichtungen 8, die sich ebenfalls teilweise überdecken und auf diese Weise eine größere Teilarbeitsbreite abdecken, sind unterhalb der Ebene der Pflückwalzen 14 angeordnet. Fig. 7 zeigt eine Abwandlung der in Fig. 6 gezeigten Version, bei der die bewegten Messer 26 direkt auf die Pflückwalzen 14 aufgesetzt sind.

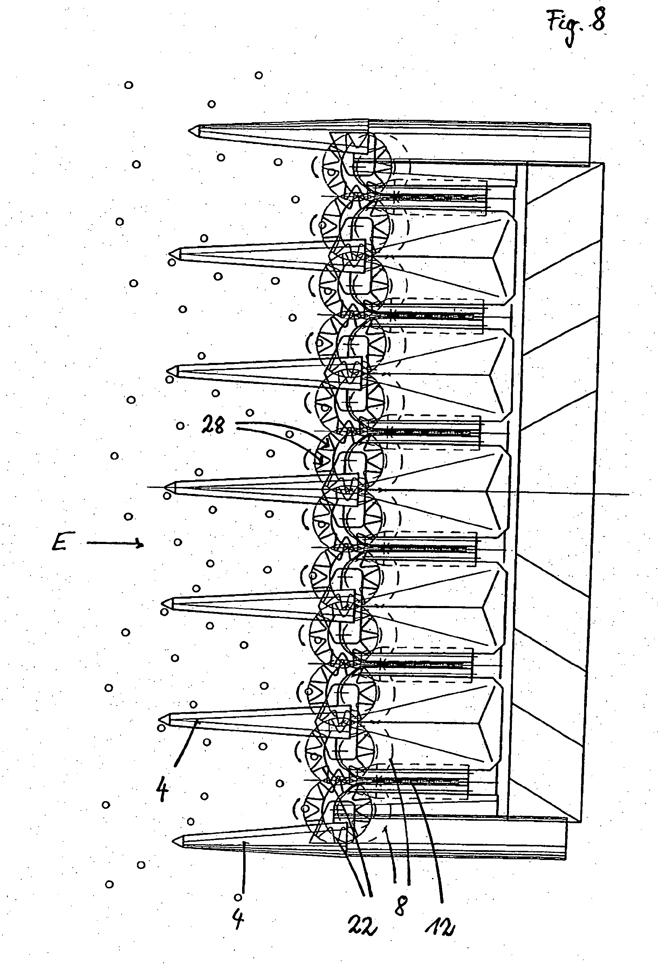

In Fig. 8 ist ein Vorsatzgerät aus einer Ansicht von oben gezeigt. In dieser Ansicht ist gut erkennbar, dass das Vorsatzgerät insgesamt sechs Pflückaggregate 12 aufweist, die nebeneinander angeordnet sind. Jedem Pflückaggregat 12 sind zwei gegenläufig angetriebene Stängelstützen 22 zugeordnet und zwei rotierende oder feststehende Messerscheiben von Schneidvorrichtungen 8, die in der Zeichnung nur durch gestrichelte Linien erkennbar sind. Es ist gut erkennbar, dass die Schneidvorrichtungen 8 in Einzugsrichtung E den Stängelstützen 22 nachgeordnet sind. Vor dem Anbaugerät 2 befinden sich - durch kleine Kreise angedeutet - eine Anzahl von Pflanzenstängeln des Halmguts 6, die zu ernten sind. Vor den Pflückaggregaten befinden sich Halmteiler 4, die sehr schmal geformt sind, um nicht mit dem Großteil des einlaufenden Ernteguts zu kollidieren. Nur dort, wo ein Pflanzenstängel im Grenzbereich zwischen zwei benachbarten Pflückaggregaten 12 in den Wirkbereich des Vorsatzgerätes 2 gelangt, teilt ein Halmteiler 4 den entsprechenden Pflanzenstängel dem einen oder anderen Pflückaggregat zu.

Aus der Ansicht von oben sind auch die Aufnahmetaschen 28 im Umfang der Stängelstützen 22 erkennbar. An einigen Stellen der Zeichnung ist erkennbar, dass Pflanzenstängel in Aufnahmetaschen von Stängelstützen 22 gelangen. Durch die Rotationsbewegung der Stängelstützen 22 werden diese Pflanzenstängel unmittelbar von der entsprechenden Stängelstütze 22 erfasst und auf dem Pflückaggregat 12 zugefördert. Aus der Ansicht von oben ist erkennbar, dass die Stängelstützen 22 nahezu die gesamte Arbeitsbreite des Vorsatzgerätes 2 abdecken.

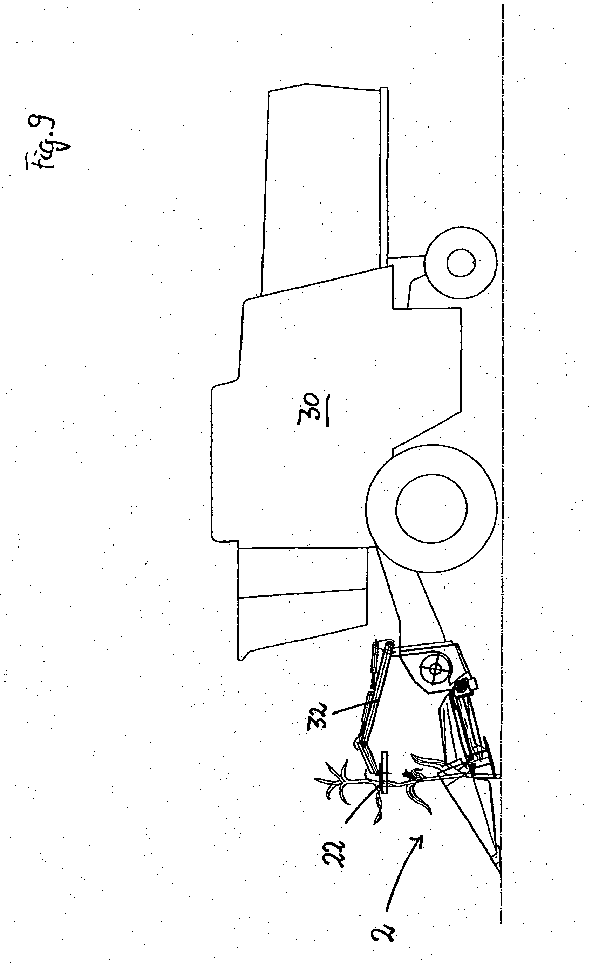

In Fig. 9 ist ein Anbaugerät 2 gezeigt, das an einen Mähdrescher 30 angebaut ist. Die Stängelstütze 22 ist von einem Haltearm 32 gehalten, der gelenkig gelagert ist. Mittels Hydraulikzylindern oder vergleichbarer Stellvorrichtungen ist die Stängelstütze 22 in Längsrichtung und/oder in ihrer Höhe und/oder in ihrem Anstellwinkel verlagerbar und/oder in ihrer Drehzahl verstellbar. Dadurch kann die Stängelstütze 22 leicht an unterschiedliche Erntebedingungen angepasst werden.

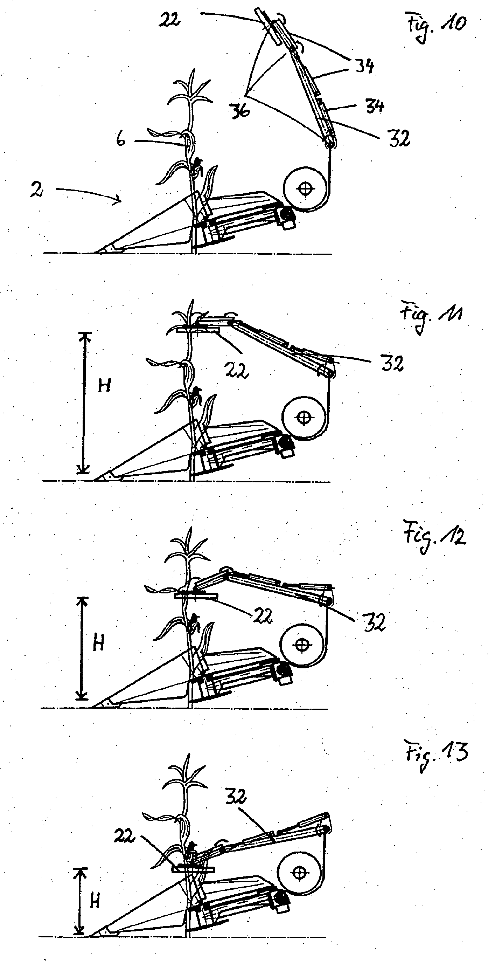

In Fig. 10 ist die Stängelstütze 22 in einer hochgeschwenkten Position gezeigt, in der sie nicht während der Ernte mit dem zu erntenden Halmgut 6 in Kontakt gebraten kann. Der Haltearm 32 ist im Ausführungsbeispiel mit zwei Schenkeln ausgestaltet und mittels drei Hydraulikzylindern 34um drei Drehachsen 36 verstellbar. In Fig. 11 ist die Stängelstütze 22 mittels einer veränderten Einstellung des Haltearms 32 in einer vertikalen Höhe H gehalten, in der die Stängelstütze einen Pflanzenstängel an dessen oberem Ende kontaktiert und abstützt. In Fig. 12 ist die Stängelstütze 22 in einer niedrigeren Höhe H gehalten, in der sie den Pflanzenstängel am unteren Ende des oberen Drittels des Pflanzenstängels abstützt. In Fig. 13 ist die Stängelstütze 22 schließlich in einer so niedrigen Höhe H gezeigt, dass sie den Pflanzenstängel unterhalb eines Fruchtstands des Halmguts 6 abstützt.

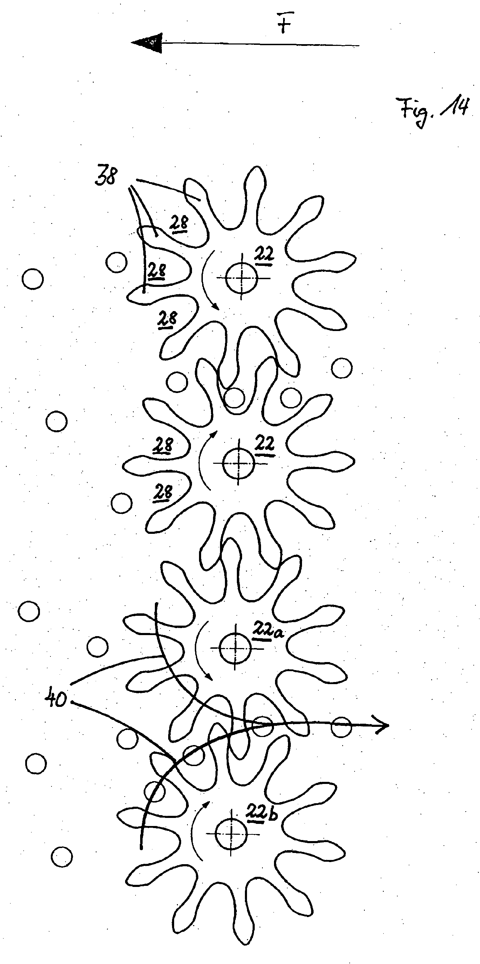

In Fig. 14 sind vier Stängelstützen 22 aus einer Ansicht von oben gezeigt, die zwei Paare von gegenläufig angetriebenen Stängelstützen bilden. Jede Stängelstütze 22 definiert über die Aufnahmetaschen 28, die durch Vorsprünge 38 voneinander getrennt sind, und ihre jeweilige Bewegungsbahn einen Förderweg 40, über den Pflanzenstängel förderbar und abstützbar sind. In Fig. 14 sind die jeweiligen Förderwege 40 für die Stängelstützen 22a und 22 b eingezeichnet. Im Ausführungsbeispiel überlagern sich die Förderwege 40 der beiden Stängelstützen 22a, 22b, da sich die Hüllkurven der beiden Stängelstützen 22a, 22 b teilweise überdecken beziehungsweise die Vorsprünge 38 teilweise ineinander kämmen. Entlang des Förderwegs 40 für die Stängelstütze 22b ist durch die in den Aufnahmetaschen 28 eingezeichneten Kreise, die Pflanzenstängel darstellen, gezeigt, wie Pflanzenstängel in die Aufnahmetaschen 28 aufgenommen und während der Drehung der Stängelstütze 22b in die eingezeichnete Rotationsrichtung entlang des Förderwegs 40 in den Aufnahmetaschen 28 abgestützt bleiben und schließlich, nachdem sie von anderen Förderaggregaten des Vorsatzgeräts 2 erfasst wurden, auch ohne Abstützung durch die Stängelstütze 22b in Einzugsrichtung E hinter der Stängelstütze 22b im Vorsatzgerät 2 verbleiben.

Die Erfindung ist nicht auf das vorstehend beschriebene Ausführungsbeispiel beschränkt. Dem Fachmann bereitet es keine Schwierigkeiten, die Erfindung auf eine ihm als geeignet erscheinende Weise unter Anwendung seines Fachwissens abzuwandeln und dabei an eine konkrete Aufgabenstellung anzupassen, ohne dass dieser dabei dadurch die Benutzung des Gegenstands der Erfindung vermeidet.

## Patentansprüche

1. Vorsatzgerät (2) zur Ernte von stängeligem Halmgut (6) mit
- Halmteilern (4),
- Schneidvorrichtungen (8) zum Abschneiden des stängeligem Halmguts (6),
- Fördervorrichtungen (10) zum Abfördern des geschnittenen stängeligem Halmguts (6),
- einer Anzahl von über die Arbeitsbreite des Vorsatzgeräts (2) verteilten Pflückaggregaten (12) zur Trennung von Früchten von den Stängeln mit jeweils mindestens einer Pflückwalze (14) und einem der Pflückwalze (14) zugeordneten Pflückspalt (16),
- einer jedem Pflückaggregat (12) zugeordneten Zerkleinerungsvorrichtung (18) für die Stängel; und
- einer Vorrichtung (20) zum Sammeln und Zusammenführen von abgetrennten Früchten,
wobei jedem Pflückaggregat (12) zumindest eine antreibbare Stängelstütze (22) zugeordnet ist, die höhenmäßig beabstandet zum Pflückaggregat (12) und zu den Schneidvorrichtungen (8) angeordnet ist,
**dadurch gekennzeichnet, dass**
die Stängelstütze (22) in Fahrtrichtung (F) dem zugehörigen Pflückaggregat (12) vorgeordnet ist, die Stängelstützen (22) an einem oder mehreren schwenkbaren Haltearmen (32) angeordnet sind, und die Stängelstützen (22) in Längsrichtung und/oder in ihrer Höhe (H) und/oder in ihrem Anstellwinkel verlagerbar und/oder in ihrer Drehzahl verstellbar sind.

2. Vorsatzgerät (2) nach Anspruch 1, **dadurch gekennzeichnet, dass** in Fahrtrichtung (F) des Vorsatzgeräts (2) die Halmteiler (4) den antreibbaren Stängelstützen (22) über ihre ganze oder zumindest über einen Teil ihrer Baulänge vorgeordnet und die Schneidvorrichtungen (8) den antreibbaren Stängelstützen (22) nachgeordnet sind.

3. Vorsatzgerät (2) nach Anspruch 1 oder 2, dadurch gekenntzeichnet, dass mindestens eine der Stängelstützen (22) mit einem hydraulischen oder elektrischen Motor antreibbar ist, der mit der Stängelstütze (22) wirkverbunden ist, und die Versorgungsleitung zur antriebsmäßigen Versorgung des Motors mit hydraulischer oder elektrischer Energie entlang eines schwenkbaren Haltearm (32) verlegt ist.

4. Vorsatzgerät (2) nach einem der vorhergehenden Ansprüche; **dadurch gekennzeichnet, dass** die Stängelstütze (22) in einer Höhe oberhalb der Fruchtstände des Halmgutes (6) angeordnet ist.

5. Vorsatzgerät (2) nach einem der vorhergehenden Ansprüche, **dadurch gekennzeichnet, dass** die Stängelstütze (22) von ihr abgestütztes Halmgut (6) bei einer Förderbewegung entlang eines mittels der Stängelstütze (22) vorgegebenen Förderweges (40) auf das zugehörige Pflückaggregat (12) zu bewegt.

6. Vorsatzgerät (2) nach Anspruch 5, **dadurch gekennzeichnet, dass** die Stängelstütze (22) und der durch die Stängelstütze (22) definierte Förderweg. (40) in ihrer räumlichen Lage im Verhältnis zur zugehörigen Schneidvorrichtung (8) räumlich so einstellbar sind, dass ein von der Stängelstütze (22) über den Verlauf des Förderwegs (40) abgestützter Pflanzenstängel vor, während und nach dem Schneidvorgang durch die Schneidvorrichtung (8) abgestützt ist.

7. Vorsatzgerät (2) nach einem der vorhergehenden Ansprüche, **dadurch gekennzeichnet, dass** die Schneidvorrichtungen (8) und/oder die Fördervorrichtungen (10) die gesamte oder zumindest nahezu die gesamte Arbeitsbreite des Vorsatzgerätes (2) in Fahrtrichtung (F) abdecken.

8. Vorsatzgerät (2) nach einem der vorhergehenden Ansprüche, **dadurch gekennzeichnet, dass** die Stängelstütze in Einzugsrichtung (E) des Halmguts (6) in das Vorsatzgerät (2) gesehen hinter der Spitze eines zugehörigen Halmteilers (4) angeordnet ist.

9. Vorsatzgerät (2) nach einem der vorhergehenden Ansprüche, **dadurch gekennzeichnet, dass** einem Pflückaggregat (12) zwei gegenläufig antreibbare Stängelstützen (22) zugeordnet sind, die jeweils eine rechts und eine links von der Längsmittelachse des Pflückaggregats (12) gelegene Teilarbeitsbreite des Vorsatzgerätes (2) abdecken.

10. Vorsatzgerät (2) nach Anspruch 9, **dadurch gekennzeichnet, dass** die Hüllkurven der Bewegungsbahnen der beiden Stängelstützen (22) sich einander teilweise überdecken.

11. Vorsatzgerät (2) nach einem der vorhergehenden Ansprüche, **dadurch gekennzeichnet, dass** die Fördergeschwindigkeit der Stängelstütze (22) gleich oder größer derVorfahrtgeschwindigkeit des Vorsatzgeräts (2) ist.

12. Vorsatzgerät (2) nach einem der vorhergehenden Ansprüche, **dadurch gekennzeichnet, dass** die Stängelstütze (22) als Rotationskörper mit mehreren Aufnahmetaschen (28) ausgebildet ist.

13. Vorsatzgerät (2) nach Anspruch 12, **dadurch gekennzeichnet, dass** auf der in Rotationsrichtung nacheilender Seite der Aufnahmetasche (28) jeweils ein in Rotationsrichtung vorauseilend ausgestalteter Vorsprung ausgeformt ist.

14. Vorsatzgerät (2) nach einem der vorhergehenden Ansprüche, **dadurch gekennzeichnet, dass** die Zerkleinerungsvorrichturig (18) rotierende Messer aufweist, die auf einer Welle (24) angeordnet sind, die parallel zum Pflückspalt (16) verläuft, und die mit ihren Schneidkanten in den Hüllkreis eines oder mehrerer Einzugsrotoren hineinragen.

15. Vorsatzgerät (2) nach einem der vorhergehenden Ansprüche, **dadurch gekennzeichnet, dass** eine oder mehrere Stängelstützen (22) einen oder mehrere um eine vertikale oder zumindest annähernd vertikale Drehachse rotierend antreibbaren Rotationskörper aufweist.

## Claims

1. Attachment (2) for harvesting stalky stem material (6), comprising:
- stem cutters (4);
- cutting devices (8) for cutting the stalky stem material (6);
- conveying devices (10) for conveying away the cut stalky stem material (6);
- a number of picking units (12), for separating fruit from the stalks, which are distributed across the working width of the attachment (2) and each comprise at least one picking roller (14) and a picking gap (16) associated with the picking roller (14),
- a grinding device (18) for the stalks, which is associated with each picking unit (12), and
- a device (20) for collecting and combining separated fruit;
at least one drivable stalk support (22) being associated with each picking unit (12), which stalk support is arranged so as to be spaced apart vertically from the picking unit (12) and the cutting devices (8),
**characterised in that** in the direction of travel (F), the stalk support (22) is arranged upstream of the associated picking unit (12), the stalk supports (22) are arranged on one or more pivotable retaining arms (32), and the stalk supports (22) can be moved in the longitudinal direction and/or vertically (H) and/or with regard to the pitch thereof and/or can be adjusted with regard to the rotary speed thereof.

2. Attachment (2) according to claim 1, **characterised in that**, in the travel direction (F) of the attachment (2), the stem cutters (4) are arranged upstream of the drivable stalk supports (22) over the entire overall length thereof, or at least over part of the overall length thereof, and the cutting devices (8) are arranged downstream of the drivable stalk supports (22).

3. Attachment (2) according to either claim 1 or claim 2, **characterised in that** at least one of the stalk supports (22) can be driven by a hydraulic or electric motor which is operatively connected to the stalk support (22), and the supply line for supplying drive to the motor by means of hydraulic or electric energy is positioned along a pivotable retaining arm (32).

4. Attachment (2) according to any of the preceding claims, **characterised in that** the stalk support (22) is arranged so as to be at a level above the position of the fruit on the stem material (6).

5. Attachment (2) according to any of the preceding claims, **characterised in that**, during a conveying movement along a conveying path (40) which is predefined by the stalk support (22), the stalk support (22) moves from the stem material (6) supported thereby towards the associated picking unit (12).

6. Attachment (2) according to claim 5, **characterised in that** the stalk support (22) and the conveying path (40) defined by the stalk support (22) can be spatially adjusted in the spatial position thereof relative to the associated cutting device (8) such that a plant stalk which is supported by the stalk support (22) over the extent of the conveying path (40) is supported prior to, during, and after the cutting process by the cutting device (8).

7. Attachment (2) according to any of the preceding claims, **characterised in that** the cutting devices (8) and/or the conveying devices (10) cover the entire working width of the attachment (2), or at least almost the entire working width thereof, in the direction of travel (F).

8. Attachment (2) according to any of the preceding claims, **characterised in that** the stalk support, viewed in a direction (E) in which the stem material (6) is pulled into the attachment (2), is arranged downstream of the tip of an associated stem cutter (4).

9. Attachment (2) according to any of the preceding claims, **characterised in that** two contradirectionally drivable stalk supports (22) are associated with a picking unit (12) and, respectively, cover a partial working width of the attachment (2), which partial working width is located to the right and to the left of the longitudinal centre axis of the picking unit (12) respectively.

10. Attachment (2) according to claim 9, **characterised in that** the envelope curves of the movement paths of the two stalk supports (22) overlap one another in part.

11. Attachment (2) according to any of the preceding claims, **characterised in that** the conveying speed of the stalk support (22) is equal to or greater than the advancing speed of the attachment (2).

12. Attachment (2) according to any of the preceding claims, **characterised in that** the stalk support (22) is formed as a rotational body having a plurality of receiving recesses (28).

13. Attachment (2) according to claim 12, **characterised in that** a projection, which is designed to lead in the rotational direction, is formed in each case on the side of the receiving recesses (28) which trails in the rotational direction.

14. Attachment (2) according to any of the preceding claims, **characterised in that** the grinding device (18) comprises rotating blades which are arranged on a shaft (24) extending in parallel with the picking gap (16) and of which the cutting edges project into the envelope curve of one or more pulling-in rotors.

15. Attachment (2) according to any of the preceding claims, **characterised in that** one or more stalk supports (22) comprises one or more rotational bodies which can be driven so as to rotate about a vertical, or at least almost vertical, rotational axis.

## Revendications

1. Appareil adaptable (2) destiné à la récolte de chaume en tige (6), comprenant
- des déchaumeurs(4),
- des dispositifs de coupe (8) servant à couper le chaume en tige (6),
- des dispositifs de transport (10) servant à emporter le chaume en tige (6) coupé,
- un certain nombre d'unités de cueillage (12) réparties sur la largeur de travail de l'appareil adaptable (2) pour séparer les fruits des tiges, lesquelles comportent chacune au moins un rouleau cueilleur (14) et une fente de cueillage (16) associée au rouleau cueilleur (14),
- un dispositif de broyage (18), destiné à la tige, qui est associé à chaque unité de cueillage (12), et
- un dispositif (20) de collecte et de rassemblement des fruits séparés,
chaque unité de cueillage (12) étant associée à au moins un support de tige entraînable (22) qui est disposé de façon espacée en hauteur par rapport de l'unité de cueillage (12) et aux dispositifs de coupe (8),
**caractérisé en ce que**
le support de tige (22) est disposé en avant de l'unité de cueillage (12) associée par référence au sens de déplacement (F), les supports de tige (22) sont disposés au niveau d'un ou de plusieurs des bras de support pivotants (32), et les supports de tige (22) sont déplaçables dans la direction longitudinale et/ou dans le sens de leur hauteur (H) et/ou en terme d'angle d'attaque et/ou réglable en vitesse de rotation.

2. Appareil adaptable (2) selon la revendication 1, **caractérisé en ce que**, par référence au sens de déplacement (F) de l'appareil adaptable (2), les déchaumeurs (4) sont disposés en avant des supports de tige entraînables (22) sur toute leur longueur ou au moins sur une partie de leur longueur et les dispositifs de coupe (8) sont disposés en arrière des supports de tige entraînables (22).

3. Appareil adaptable (2) selon la revendication 1 ou 2, **caractérisé en ce qu'**au moins un des supports de tige (22) peut être entraîné par un moteur hydraulique ou électrique qui est fonctionnellement relié au support de tige (22) et la ligne d'alimentation servant à l'alimentation d'entraînement du moteur en énergie hydraulique ou électrique est placée le long d'un bras de support pivotant (32).

4. Appareil adaptable (2) selon l'une des revendications précédentes, **caractérisé en ce que** le support de tige (22) est disposé à une hauteur au-dessus des inflorescences du chaume (6).

5. Appareil adaptable (2) selon l'une des revendications précédentes, **caractérisé en ce que** le support de tige (22) déplace le chaume (6) qu'il supporte lors d'un déplacement le long d'un chemin de transport (40) prédéterminé au moyen du support de tige (22) en direction de l'unité de cueillage (12) associée.

6. Appareil adaptable (2) selon la revendication 5, **caractérisé en ce que** le support de tige (22) et le chemin de transport (40) défini par le support de tige (22) sont réglables en position dans l'espace par rapport au dispositif de coupe (8) associé de sorte qu'une tige, supportée par le support de tige (22) sur le chemin de transport (40), est supportée avant, pendant et après le processus de coupe par le dispositif de coupe (8).

7. Appareil adaptable (2) selon l'une des revendications précédentes, **caractérisée en ce que** les dispositifs de coupe (8) et/ou les dispositifs de transport (10) couvrent toute ou au moins sensiblement toute la largeur de travail de l'appareil adaptable (2) dans le sens de déplacement (F).

8. Appareil adaptable (2) selon l'une des revendications précédentes, **caractérisé en ce que** le support de tige est disposé en arrière de la pointe d'un déchaumeur (4) associé par référence au sens d'introduction (E) du chaume (6) dans l'appareil adaptable (2).

9. Appareil adaptable (2) selon l'une des revendications précédentes, **caractérisé en ce qu'**à une unité de cueillage (12) sont associés deux supports de tige (22), entraînables dans des sens opposés, qui recouvrent chacun des largeurs de travail partielles de l'appareil adaptable (2) situées à droite et à gauche de l'axe central longitudinal de l'unité de cueillage (12).

10. Appareil adaptable (2) selon la revendication 9, **caractérisé en ce que** les enveloppantes des trajectoires des deux supports de tige (22) se chevauchent partiellement.

11. Appareil adaptable (2) selon l'une des revendications précédentes, **caractérisé en ce que** la vitesse de déplacement du support de tige (22) est supérieure ou égale à la vitesse d'avancement de l'appareil adaptable (2).

12. Appareil adaptable (2) selon l'une des revendications précédentes, **caractérisé en ce que** le support de tige (22) est configuré en corps de rotation pourvu d'une pluralité de poches de réception (28).

13. Appareil adaptable (2) selon la revendication 12, **caractérisé en ce qu'**une saillie, disposée en avant par référence au sens de rotation, est du côté de chacune des poches de réception (28) qui est en retard par référence au sens de rotation.

14. Appareil adaptable (2) selon l'une des revendications précédentes, **caractérisé en ce que** le dispositif de broyage (18) comporte des lames rotatives qui sont disposées sur un arbre (24) s'étendant parallèlement à la fente de cueillage (16) et qui font saillie au niveau de leurs bords de coupe dans les enveloppantes d'un ou de plusieurs rotors d'introduction.

15. Appareil adaptable (2) selon l'une des revendications précédentes, **caractérisé en ce qu'**un ou plusieurs supports de tige (22) comportent un ou plusieurs corps de rotation pouvant être entraînés en rotation sur un axe de rotation vertical ou au moins sensiblement vertical.
